# EUROPEAN PATENT APPLICATION

(11) **EP 4 331 340 A1**
(43) Date of publication of application: **06.03.2024**
(21) Application number: 23194871.2
(22) Date of filing: 01.09.2023
(51) Int. Cl.: A01D 34/84, A01D 43/16, A01D 34/695, A01D 34/67

(54) **IMPROVED MOWING APPARATUS**

(30) Priority: 02.09.2022 GB 202212773
(71) Applicant: Jollie Partners Limited, Barnsley, South Yorkshire S70 1TL (GB)
(72) Inventor: ARMSTRONG, Paul, BARNSLEY, S70 1TL (GB)
(74) Representative: Houghton, Mark Phillip

(57) **Abstract**

The invention provides a gardening apparatus comprising:
a housing containing a mower apparatus, and at least one strimmer 30 positioned at a point along the circumference of the mower apparatus; the mower apparatus comprises one or more mower blades coupled to a shaft to form a rotor for rotating the blades to mow;
wherein the apparatus is configured so that, in use, the movements of the blades of the mower apparatus form an air cushion/bed under the housing 10, upon which the gardening apparatus can glide. The invention provides a more versatile and efficient gardening apparatus.

## Description

### Background

When gardening, or maintaining a grassy area such as a playing field or park, there inevitably come a time when the area will need to be mowed. However, this process normally requires multiple tools to achieve, namely a mower for cutting the majority of the area, a trimmer for cutting around the edges and smaller areas the mower could not reach, and lastly a rack and/or brush for collecting the clippings after the cutting is complete. The fact that multiple tools are necessary means that the process can be time-consuming and tedious due to the need to move multiple pieces of equipment. This process can be particularly difficult for the elderly who may struggle to transport all the equipment needed.

Further, both the mower and the strimmer require power, which may cause complications if there is only a limited power supply, such as there being only one suitable power outlet, as this would require the user to constantly switch between the two devices. In some cases, wherein both devices can be powered simultaneously, the use of multiple devices may create a dangerous risk to the user, due to the risk of the power cable of one device becoming caught with, or cut by the other device. This may result in exposed wires that could cause harm to the users or others in the area.

Therefore, there is a need for an improved gardening apparatus that can provide the functionality of both the mower, to cut large areas, and a trimmer, for cutting small areas and edges. Thereby removing the need for multiple tools, making the process of mowing the desired area less tedious and less time-consuming.

Examples of currently used devices can be found in the following:
GB2490511A, which defines a mower with a primary rotor, with large blades for cutting wider areas, and two forward auxiliary cutters, comprising smaller blades positioned forward of the primary rotor for trimming. The device also uses a combination of wheels and rollers for flattening the area once it has been cut.

US7658057B1, which discloses a trimmer/edger attached to a conventional lawnmower. Wherein the trimmer comprises a planar disk for cutting attached to a motor powered by the lawnmower's power supply. Wherein the trimmer is coupled to an arm so that it can rotate into a horizontal position when in use, allowing the mower and trimmer to be used simultaneously. The arm may also lift and rotate the disk into a vertical position, which is above the mower blades, when not in use.

EP01 19339A1, which discloses a device comprising multiple trimmers contained within a single housing, with a single rotor configured to rotate all of the trimmers simultaneously. Thereby allowing the trimmers to cover a much larger area, though it lacks the large mower blades.

EP054161 1A1, which discloses a mulching mower, comprising two large mower blades positioned side-by-side, with a smaller trimming blade positioned in the centre, forward of the larger blades. In this device, the cowls/housings of the large blades include a plurality of kickers for directing clippings back into the blades, thereby allowing the clippings to be mulched and spread over the area.

### Summary

The present provides a gardening apparatus that helps to reduce the need for multiple tools when mowing a lawn or otherwise cutting grass at a location. The apparatus comprises a housing containing a mower apparatus, and at least one strimmer positioned at a point along the circumference of the mower apparatus. Wherein the mower apparatus comprises one or more mower blades coupled to a shaft to form a rotor for rotating the blades to mow large areas, while the strimmer provides a smaller cutting implement, suitable for trimming the edges of the area and reaching areas that would be too small for the larger mowing blades. And a handle that is used to steer and direct the apparatus when in use. The gardening apparatus is configured so that the mower apparatus is covered by a cowl, this cowl is shaped so that in use, the movements of the mower blades form an air cushion/bed under the housing. This air bed can thereby raise the apparatus a small distance, such as 5 to 10 millimetres. Once risen, the gardening apparatus can glide over the surface of the lawn, riding the air bed under the housing, allowing the user to move the apparatus easily. Further, the use of such an air bed would remove the need for wheels, it is noted that such wheels could cause damage to the mowed surfaces, for example by pulling up mud and dirt as it travels over the mowed area. Such issues are removed by replacing the need for wheels with the hover mechanic described above.

The garden apparatus also comprises at least a pair of motors; a first motor configured to power the rotor, to turn the mower blades, and a second motor to power the strimmer. It is noted that in embodiments with multiple strimmers there may be a separate small motor for each strimmer. The apparatus would also comprise a suitable power supply coupled to both the motor for the mower apparatus and the motor(s) for the strimmer. The use of a single power source not only helps to reduce the complexity of the apparatus design but also helps to reduce the overall weight of the apparatus making it easier for the device to hover when in use, by reducing the amount of force the mower blades need to generate. Wherein the handle further comprises a switch, wherein the switch is configured to control which devices receive the power from the common power source, allowing the user to choose to supply power to the mover the strimmer, or both. It is noted that in cases wherein the apparatus comprises multiple strimmers, the switch, or another suitable control, may be used to send power to a specific strimmer, or group of strimmers, giving the user more precise control over which areas of the location the apparatus would cut but also helps to save power, by allowing the user to remove power from redundant strimmers.

In each embodiment of the disclosed apparatus, the housing contains the mower, strimmer, and handle. In the embodiments with a single strimmer, it is preferable that the elements of the housing be arranged so that the strimmer is positioned at the front of the housing, forward of the mower rotor, and the handle extends rearward from the back of the housing. More specifically, the strimmer should be positioned at the front of the housing, in the centre, this will allow the user to more accurately determine where the strimmer is cutting, for if the strimmer was off-centre, it may be more difficult to correctly align. Additionally, the housing may be thinner at the front, therefore by placing the strimmer at the tip of the front of the housing, the user would be more likely to reach small areas, which would be too small for the whole housing.

However, in embodiments with multiple strimmers, it is preferable that each strimmer remains in front of the mower where possible, as this will allow the user to more easily see, and control where the strimmers are cutting, as the strimmers would be positioned in the direction the apparatus is facing and should remain within the user's field of view when in use. However, it may be preferable to have at least one strimmer on the sides of the housing, as such side strimmers may help to trim the edges of the lines cut by the mower blades, or to cut the missed areas between lines cut by the mower. It is also noted that when the user turns the apparatus at the edge of the area to be mowed, these side strimmers may help to cut the grass along the edge of the area, which may be hard to reach with the larger mower. Therefore, in embodiments with two, or three strimmers, it is preferable to have one strimmer located on each side of the housing. In the case of two strimmers, the strimmers may be located on each side of the housing's front, or front tip. In the case where there are three strimmers, the first strimmer would be front and centre as described above, with the other strimmers being located somewhere along the sides of the housing, possibly in towards the back of the housing so that the strimmers are evenly spaced apart, forming a triangle with the mower blade in the centre, so that the strimmers do not obstruct one another when trying to reach into smaller areas.

As previously mentioned, it is preferable for the handle of the device to extend rearward. This way the user is all way behind the cutting blades/strimmers and can push the apparatus away from themselves when in use. Using such a configuration may help to reduce the risk of injury to the user, as the handle extending away from the housing ensures there is a space between the user and the cutting blades/strimmers, further as the user is positioned at the rear of the apparatus, they reduce the risk of the apparatus passing over their feet, as they will likely be pushing the apparatus forward, away from themselves. It is also noted that in cases wherein the apparatus uses a wired power source, such as mains electricity, the wire for the power source would extend from the handle to again reduce the risk to the user, as the wire would extend rearwards, reducing the risk of the apparatus passing over the wire, and potentially cutting it. These safety features are especially useful given the use of the hover mechanism described earlier wherein the apparatus hovers above the ground when in use, as the apparatus may be at risk of drifting in direction when the ground beneath it is uneven, and the user is more likely to not notice the apparatus pass over their foot, or the wire of the power supply while it is hovering.

To help further reduce the risk to the user the handle of the apparatus may include a spring-loaded safety lever. This leaver is positioned so that the user will actuate the lever as they grip, and squeeze the handle. The lever when actuated will allow power to be supplied to the mower and strimmers, however, when released the power supply will be cut off from the rest of the apparatus, stopping the mower and strimmer immediately. Thus, providing the user with a quick way to stop the apparatus in the case of an accident, or in cases where the hovering apparatus has started to drift away from the user.

The edge of the housing may also feature a trough that follows the edge of the housing. This trough may be formed by folding up the end of the material used to form the housing. Such a trough may act as a bumper around the mower, to help prevent the apparatus from colliding with walls, or other objects. It may also help to prevent the user from passing the apparatus over their feet or those of others in the area as the bumper should hit them before this occurs. Additionally, the trough can help to form a foot, or base that the apparatus can rest upon when the apparatus is not in use. For, in use, the device should be hovering above the ground, but once the motors stop the apparatus will fall back to the ground, therefore the trough can act as a base to absorb the impact as the apparatus lowers and for the apparatus to rest on when not in use to reduce the risk of damage to the blades and strimmer sans the trough will help keep them off of the ground.

Additionally, to further help improve the safety of the device, each strimmer may have a separate cowl, cover, or housing, to act as a barrier between the cutting wire of the strimmer and the edge of the housing to reduce the risk of the user being cut by the strimmer. Further, these covers may help to direct the flow of air from each strimmer, directing the air propelled by the rotating strimmer toward either the ground or the mower apparatus to provide additional lift to the device when in use. This would be especially useful in cases when power is supplied to the strimmers alone, as the mower provides the majority of the lift to the apparatus, though it is likely multiple strimmers would be necessary to lift the apparatus without the mower.

To help address this issue the strimmer may comprise a separate strimmer unit, which can be removed from the rest of the housing and used separately when the user does not want to use the mower. This may be preferable when the device uses only one strimmer, as a single strimmer may struggle to generate sufficient lift on its own. Alternatively, the apparatus may be configured to have adjustable blade heights. Specifically, the user may be able to control the height of the mower blades, relative to the strimmers. So that when the user wishes to use the strimmer without the mower, the user can raise the mower's blades to stop the mower from cutting, while still providing lift so that the apparatus can still be moved.

The apparatus may further comprise control to adjust the height of the strimmers, or both the strimmer and the mower blades. Specifically, the user can adjust the strimmers and blades to a desired height to cut the grass to a desired length. It is noted that the user may use the strimmers to cut specific areas of the location, such as around the edges, to a different length from the rest of the location. The user may also use this mechanism to raise the strimmers above the mower blades, to stop the strimmers from cutting when they are not required. Wherein either the housing or the handle comprises a suitable control to the height of the one or more strimmers, such as a switch or dial, which is configured to actuate the strimmers to rise or fall to the desired height. It is noted that there may also be a similar control to adjust the height of the mower blade within the housing. This control can be used to adjust the length the grass will be cut to, by the mower, it may also be used to adjust the height at which the apparatus would hover when in use. For example, if the mower blades are raised the height at which the apparatus hovers may decrease, as it is the mower blades that provide lift to the apparatus, so by increasing the gap between the blades and the ground the amount of lift may be decreased, as the downward force generated by the blades dissipates as the distance from the blades increases. Therefore, a user may raise the mower blades to lower the hovering height of the housing, and in turn, lower the cutting height of the strimmer. If the user wants to raise the mower blades to stop the blades from cutting but wants the height of the strimmer to remain unchanged, the controls may be configured to increase the speed of the mower rotor, and the blades rise, to keep the downforce generated by the mower, and by extension the height of the housing constant.

The housing may also comprise a removable compartment, or container, for collecting the clippings generated by the mower blades. Wherein the housing comprises a chute that connects the section of the housing that contains the mower blade to the container. The housing may also have a fan or another suitable mechanism configured to direct airflow from the mower blades towards the clipping container, to help direct clippings down the chute so they can be collected within the removable container. In some embodiments, the one or more strimmers may comprise a cowl, or cover, which is configured to direct the airflow and clippings from each strimmer towards the mower blades, in the centre of the housing, so that these clippings can also be directed toward the chute, so that the clippings from the strimmer may also be collected. This can help in cleaning up the potential mess caused by cutting the grass in a location, which will remove the need to brush or rake the mowed area to gather the clippings, thereby saving time for the user. It is also preferable that the clipping container be removable so that the clippings within the container can be disposed of more easily and the container can be more easily cleaned or replaced if necessary.

Similarly, the apparatus may be configured so that the strimmer and/or mower blades are removable. This way the blades of the mower can be easily removed to be cleaned or sharpened, and may also be replaced if necessary. As for the strimmer, a normal strimmer design allows the wire used for cutting to be replaced. So, when in the embodiments wherein the strimmer is removable, it should be understood that the strimmer comprises a unit, with each unit being made up of a casing containing the strimmer rotor and cutting wire, and would further comprise any cover or cowl that would surround the strimmer. Each of these units could be removed to be clean, and if necessary, they may also be removed to be repaired or replaced.

In some embodiments, the apparatus may comprise a set of actuator arms. Wherein the arms couple the strimmer units described above to the housing. More specifically these arms are configured to adjust the position of the strimmer relative to the housing. In some cases, the arms may be configured to raise and lower the strimmer unit. As described above this raising, and lowering, of the strimmer units may adjust the length at which the strimmer will cut the grass, it may also be used to raise the strimmer above the mower blades to effectively stop them from cutting the grass, even if the strimmer was still powered. In other embodiments, the arms may be configured to pivot relative to the housing, thereby moving the strimmer horizontally relative to the housing, and adjusting the position of the strimmer along the edge of the housing. This pivoting arm may be used to sweep the strimmer over an area, without the need to rotate the whole apparatus or adjust the position of the strimmer to reach certain points in the mowed area that may not have been reachable with the strimmer in its original position, most likely this would be the case for small areas that the housing and mower are too bulky to reach. These pivoting arms are most effective in embodiments with only one strimmer, for if the apparatus had multiple strimmers, it would likely not need to adjust the position of the individual strimmer, instead, the user may use whichever strimmer is in the most preferable position. Also, the additional strimmers could block the movements of the arm. In some embodiments the strimmer may be coupled to an actuating arm that is capable of both vertical and horizontal moments, to achieve both of the beneficial effects described above.

It is also noted that in some cases the apparatus may include a guard wall positioned between the mower and the one or more strimmers. Wherein the guard wall is configured to prevent debris that has been kicked up by the mower blades, or one of the strimmers, such as small stones, from impacting the other parts of the apparatus. As this could result in damage to the mechanisms of the apparatus. Specifically, such debris could damage the blades of the mower, the cutting wire of the strimmer, or the rotors that rotate the mower blades and strimmer, should the debris impact them directly. It is also preferable that these guard walls have small holes or slots so that air can still flow between the strimmer and mower to help lift the apparatus when in use, this prevents the guard wall from interfering with the formation of the air cushion. However, it is noted that such holes, or slots, are not necessary for the embodiments in which only the mower blades produce the air cushion.

In some embodiments, the strimmer may include a strimmer cap, wherein said cap comprises a cover which attaches to the bottom of the strimmer so that it is positioned between the strimmer and the ground. This cap may act as a foot, or buffer, for the strimmer. So, when the apparatus is not in use, the caps will rest on the ground instead of the strimmer rotor itself. And in cases where the strimmer does not touch the ground, this cap may still act as a protective barrier for the strimmer rotor, to help prevent debris that has been kicked up by the strimmer, or mower, from impacting the strimmer rotor.

As previously mentioned, to operate the rotors of the mower and the strimmer, and any optional actuator arms and fans within the apparatus housing, the apparatus comprises a power source for powering each of the apparatus components. This power source can take one of several forms, including a plug to receive power from a mains outlet, one or more solar panels, a rechargeable battery, or an engine such as a petrol engine. of these options the wireless options, such as solar panels or a petrol engine, so there is no need for a wire or charger cable to connect to the main outlet, due to the risk of such wires being cut by the apparatus or becoming caught within the apparatus' rotors, which could result in damage to the wire creating a hazard due to the exposed wiring, or could create a tripping hazard for the user. In either case, by removing the need for such wires the apparatus reduces the risk to the user. Of the remaining options, a renewable power source, specifically solar panels, may be preferable to reduce the carbon footprint/ detrimental environmental effects of operating the apparatus. In such embodiments, the solar panel may be used to charge a battery mounted to the apparatus, this way the apparatus can store power over time, so it is not completely reliant on the weather to be powered. Though it is noted, that a power source, like a petrol engine, may be seen as more reliable than the renewable power source, not only because it is not dependent on the weather, but also because a fully fueled petrol engine will likely operate for longer compared to a solar panel or battery, which could make an engine more preferable. It is also noted that in some embodiments the apparatus may include a redundant power source, such as an engine or power cable, in combination with the solar panels, so that the user can rely on the redundant power source should the first fail, or in the case of solar panels, the panels have insufficient power to operate the apparatus.

In some cases, the body of the housing may also comprise one or more vents. Wherein said vents are configured to allow air to flow in and out of the body. Specifically, these vents would allow air to flow in and out of the section of the body containing the mower blades. Wherein the vents may help supply additional air to form the air cushion, which may be necessary in the cases wherein the blades have been risen, extending the distance between the blades and the ground, as more downforce will be necessary to maintain the air cushion holding the apparatus, as the increased airflow from the vents may help to provide more downforce. In some cases, the vents may also include fans to control the rate, and direction, of the airflow through the vents.

In some cases, the apparatus may comprise controls, that can adjust the speed of the rotors for at least one of the mower blades and/or the strimmer. Such controls may be used to increase the speed of either the mower, strimmer or both when using the apparatus in an area with dense grass or foliage which may require more force to cut effectively. These controls may also be used to decrease the speed of the mower, or strimmer to help preserve the energy from the power source. It is understood that in most cases the strimmer or mower could be individually switched off from the power source to save power. But in cases where the apparatus has only one or two strimmers, these strimmers may not be able to provide sufficient lift alone, meaning that the mower would still need to be powered to provide lift, but because the mower will not be cutting when the apparatus is in this state and therefore should be able to provide sufficient lift at slower rotation, compared to when the device is cutting, therefore the apparatus can save power by reducing the speed of the mower blades. But as stated these slower speeds may not be sufficient to produce that air cushion required to provide lift to the apparatus, therefore it may be preferable to have the controls include a minimum operating value for the rotor's rotation, meaning a lower speed limit for It is also noted that based on the conditions of the area in which the apparatus is used, the user may wish to raise or lower the hovering height of the apparatus, changing the size of the space between the ground and the base of the housing when in use. For example, when the ground is uneven the user may wish to raise the body to prevent damage to the body, which may be caused by impacting the raised parts of the uneven surface. This can be achieved by increasing the speeds of the mower blades, and possibly the strimmer as well, to provide a greater lift to the apparatus. The speed of the rotors may be adjusted by using dials mounted to either the housing or the handle. Using the typical speed values for such a rotor would appear to be 30000 RPM for an unburdened mower and around 12000RPM for an unburdened strimmer. It is noted that in this case, the term unburdened refers to the conditions wherein the mower blades, or strimmer, are rotating but are not cutting, or have any other factors affecting them that would reduce the speed of the rotation. As noted for denser grass, or to increase the apparatus' lift, the rotors of the invention would need to be able to increase above these values. For this reason, the apparatus may have a mower rotor configured to rotate within the range of 30000 to 70000RPM, and one or more strimmer rotors configured to rotate within the range 10000 to 30000RPM.

Therefore, by using the apparatus described above the invention provides a means of combining the broad cutting provided by a garden mower, with the precision trimming provided by a strimmer, in a single device. Wherein the device uses the rotors to hover the apparatus when in use, so that the apparatus does not disturb, or damage the area being mowed, and can be more easily manoeuvred when compared to wheeled mowers. The invention also provides means for removing the collecting clippings produced by the apparatus, thereby removing the need to rake the area after use. The present invention also provides features to improve the safety of the apparatus, such as the aforementioned trough and safety lever, as well as features to help simplify maintenance, such as removable blades and removable strimmer units. Thereby providing an all-in-one gardening device that removes the need for multiple tools, and can be used and maintained with relative ease.

### Detailed Description

The present invention is depicted in the following Figures:
Figure 1: depicts the gardening apparatus as per the present invention.
Figure 2: depicts the underside of the apparatus of Figure 1.
Figure 3: depicts the underside of the gardening apparatus comprising multiple strimmers.
Figure 4: depicts an example set of controls coupled to the handle of the gardening apparatus.

These figures comprise the following features:
10- housing
12- trough/bumper
14- handle
16- strimmer cowl/housing
18- vents
20- clipping compartment
22- chute
30- strimmer
32- strimmer cap
40- mower rotor
42,42'- mower blades
50- guard wall
60- power button
70, 72- speed dials (mower/strimmer)
80- mode switch
90- safety lever

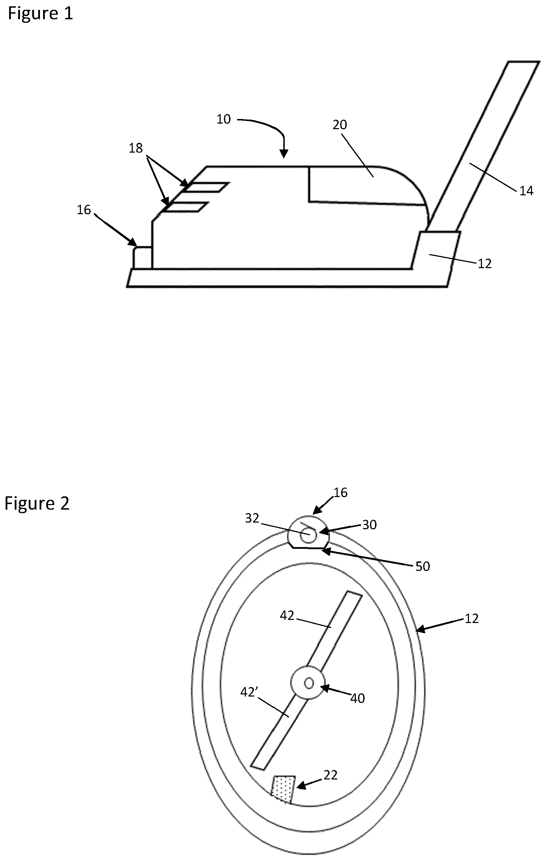

Figure 1 depicts an example gardening apparatus as per the present invention. More specifically, a gardening apparatus which combines a mower and trimmer, in the form of a hover mower and strimmer contained within a single housing and powered by a single power supply.

The depicted embodiment comprises the essential features of a housing 10, which contains the aforementioned hover mower and strimmer 30; a handle 14 which extends rearward from the housing 10 to allow a user to move and manoeuvre the housing 10 when in use. The depicted embodiment comprises additional features such as a strimmer cowl 16 for covering the strimmer 30 in a compartment that is separate from the mower, a clipping compartment 20 for collecting the clippings from the mower and strimmer 30, and a protective trough, or bumper 12, around the edge of the housing 10. It is also noted that the housing has one or more vents 18 to allow air to travel into, and out of the mower within the housing 10, this may be necessary as the invention is configured to generate an air cushion, that will raise the apparatus and allow it to hover over the area to be mowed, therefore the mower may need a constant airflow to allow such an air cushion to be formed.

In this embodiment, the user may use the mower blades 42,42' to cut over a wide area, while using the strimmer 30 to cut small areas which the mower cannot reach, and/or for trimming the edges of the mowed area. This allows the user to mow the entirety of the desired area with a single tool, removing the need to transport, and switch between multiple devices. Both the mower and strimmer components are contained within a single housing 10. With said housing 10 forms a cowl, or cover over each device, which may be a single body or separated into separate compartments. It may be preferable to have the mower in a separate compartment because as mentioned the mower of the device is a hover mower, meaning the blades 42,42' of the mower are configured to generate an air cushion which allows the apparatus to hover while in use. However, the strimmer 30 may require openings in the housing 10, which may reduce the force-generating the air cushion as the airflow from the mower blades 42,42' may escape, therefore by having the mower in a separate compartment the air cushion may be generated below said compartment, without being affected by the strimmer 30. It is noted that the use of a hover mower, such as described in the present invention, is preferable, as it removes the need for wheels which may trample the grass in the mowed area, causing damage to the grass, or possibly uprooting any grass that is caught within the wheel's treads. Further, a hover mower is more manoeuvrable than a wheeled mower, therefore the hover apparatus should make it easier for the user to move and manoeuvre the mower and strimmer 30.

It is noted that in the embodiments wherein the strimmer 30 of the apparatus are within separate compartments, each strimmer 30 may comprise a separate strimmer unit which can be removed from the housing 10. The strimmer units may be removed to use without the need to move the larger mower housing when the user needs more precision, they may also be removed to perform maintenance on the strimmer 30, or to replace a damaged strimmer more easily. It is also noted that it may be preferable for the blades 42,42' of the mower to be removable as well, this again helps with maintenance to clean, repair or replace the blades 42,42' when necessary.

The handle 14 of apparatus should always extend rearward of the housing 10, and more importantly rearward of mower blades 42,42' and strimmer 30 contained within the housing 10. This way the user can keep the apparatus in front of themselves when in use, reducing the risk of the user being caught by the strimmer 30 or mower blades 42,42' as they should always be pushing the apparatus away from themselves. This handle position also makes it easier for the user to observe where the attached strimmer 30 are positioned at all times, as they should remain within the user's field of vision, to ensure they are cutting in the desired areas. It is also noted that because the apparatus moves by hovering on an air cushion, there is no need for any additional controls or mechanisms on the handle 14 for steering the apparatus, the user can simply push the handle 14 in the desired direction. This helps to simplify the housing 10 and handle 14 designs and makes controlling the movements of the apparatus easier for the user.

The housing 10 may also comprise a bumper 12, or trough around the edge of the housing, as shown in the depicted embodiment. This bumper may be formed by folding the edge of the material used to form the housing 10, or by adding a strip of another material such as rubber to the edge of the housing. In either case this bumper 12 help to prevent damage to the housing 10, in cases where the hovering apparatus comes into contact with a wall or other obstacle. Further, the bumper 12 may also help reduce the risk of the user or other people in the area becoming caught within the mower, or strimmer 30 of the apparatus as they will be hit by the bumper 12 first, which may help direct the apparatus away from them. Therefore, the inclusion of such a bumper 12 protects both the apparatus and the user. Of the options described earlier, using the edge of the housing itself may be preferable as it removes the need for additional materials. It is also noted that the folded bumper may be more resilient to wear as there is no risk of the bumper 12 becoming detached from the housing 10. It is also noted that this bumper 12 may act as a foot for the apparatus. As the apparatus hovers when in use, when the user turns the apparatus off it will fall back to the ground, therefore if this bumper 12 may also cover at least the edge of the bottom side of the housing, and thereby help to prevent any damage that may be caused to the housing 10 as it impacts the ground.

The depicted embodiment also includes the addition of a clipping compartment 20, or a clipping collector. In which a section of the housing 10 is configured to gather the clippings left by the mower, strimmer 30 or both. Wherein the clipping compartment 20 is removable or contains a removable inlay which stores the collected clippings so that they can be removed and disposed of with ease. It is noted that the clipping compartment 20 may be coupled to one or more chutes 22, wherein the other end of the chutes 22 are coupled to the mower compartment or the strimmer cowls 16, to feed the clippings from either the mower or the strimmer 30 to the clipping compartment 20. It is also noted that the clipping compartment 20 and/or the chutes 22 that feed into the clipping compartment 20, may further comprise one or more fans to help direct airflow towards the clipping compartment 20, to help pick up the clippings and direct them down the chutes 22, in cases where the airflow from the mower blades 42,42' is insufficient to collect the clippings.

The housing may also include one or more fans within the component with the mower blades 42,42' to provide additional downforce. These fans may be coupled to the same rotor as the mower blades 42,42', so that as the mower blades 42,42' turn these additional fans provide further downforce to assist in the formation of the air cushion. This way the apparatus would be able to hover more easily, in particular, the apparatus would be able to create the same amount of downforce while using a lower rotor speed.

It is also noted that the housing 10 comprises a single power source that is configured to power both the motor/rotor 40 of the mower, and the motors of the one or more strimmers 30 contained within the housing. It is noted that this power source can take several forms, including a petrol engine, or solar panels coupled to the housing 10, a rechargeable battery mounted within the housing 10, or a power cable that extends rearward from the housing 10. It is noted that of these choices solar panels may be preferable as they are a renewable energy source that would remove the need for a cable. As the power cable may become a hazard to the user, as there is a risk of the cable being caught within the mower rotor 40, or strimmer 30 of the apparatus, which may create a tripping hazard for the user, and may also lead to the cable being cut exposing the wires within. However, due to the solar panel's power being dependent on the weather to produce power, they may be less reliable when compared to the other options. It is noted that the petrol engine and rechargeable battery also remove the need for a power cable when the apparatus is in use, of these options the engine may be the most reliable as it may power the apparatus for a longer time before needing to be refuelled compared to the battery which may need to be recharged regularly. However, the engine may also require more maintenance compared to the other options and may be more expensive to operate. Whereas the cable removes the need for refuelling/charging and therefore may be the most reliable as long as there is a suitable outlet, despite the potential hazards it may cause. Though each power supply has its advantages, the most preferable option may be a combination of two of the above-mentioned options, such as a power cable and a rechargeable battery. So that the apparatus comprises a redundant power source that may be used in cases where the primary power source fails. It is noted that regardless of which power source is chosen, the power source would supply power to both the mower rotor 40 and strimmer 30, though the user may be able to limit the power to a specific component of the apparatus, for example having the power be supplied to the mower only to help preserve power.

Figure 2 depicts the underside of the example apparatus depicted in Fig.1. as can be seen in Fig.2 bumper 12 of housing 10 surrounds the entire edge of the housing, except for the opening of the strimmer cowl 16, as this opening is necessary to direct the strimmer 30 towards the target area. Though it should be noted that there is still a wall at the back of the strimmer 30 and a strimmer cap 32 attached to the bottom of the strimmer 30. These features may help act as a bumper, or foot for the strimmer 30, so that when the apparatus stops the strimmer 30 does not impact the ground directly, as such an impact may damage the rotor or wire of the strimmer 30.

This depicted embodiment also shows the mower rotor 40, and mower blades 42,42' being in a separate compartment to the strimmer 30, as shown by the wall 50 positioned between the mower and the strimmer 30. As noted, this separate compartment for the mower may help the apparatus hover more reliably, as it is the airflow from the mower blades 42,42' that will cause the majority of the force that generates the required air cushion, having this separating wall helps the air cushion to formed without the air escaping through the strimmer opening. Though this may not always be the case, as the strimmer 30 may be configured to create downforce to assist in generating the air cushion or may be configured to direct an air flow towards the mower blades 42,42', again to assist in the formation of the air cushion.

It is also noted that in the cases where the strimmer 30 and mower are contained within a single chamber or compartment, there is not only a risk of the air cushion escaping, but there may also be a risk of the mower blades 42,42' or strimmer 30 kicking up debris, such as small rocks, which may impact the other components and cause damage to the strimmer 30, rotors 40, or mower blades 42 contained within the housing 10. For this reason, it is preferable for there to be at least a thin guard wall 50 between the strimmers 30 and the mower blades 42,42'. Wherein the guard walls 50 are configured to block any debris kicked up by either the strimmer 30 or mower. In some cases, the guard wall 50 may have small holes or slots within the side of the wall to allow air to flow between the strimmer 30 and mower for forming the air cushion as described above. However, it is noted that such walls may also stop the flow of clippings towards the clipping container chutes 22, thus there may be a need for multiple chutes 22. It is also noted that a thicker wall or base may be positioned between the mower and the strimmer 30, wherein this larger wall helps to support the weight of the housing, especially the weight of the motors and power source, that drive the mower and strimmer 30, contained within the housing 10, and can help prevent damage to the housing 10 when the apparatus powers down and impacts the ground.

In the depicted embodiment there is a single chute 22 for collecting clippings, this chute 22 is positioned within the mower blade compartment. It is noted that, in the cases where there is only one chute 22, it is preferable that said chute 22 gathers clippings from the mower blades 42,42' as they will produce a higher volume of clippings compared to the strimmer 30. Further, the strimmer 30 and their respective cowls 16 may be configured to direct an air flow towards the mower blades 42,42', which would also direct the clippings formed by the strimmer towards the mower blade, and into the depicted chute 22. So, in the cases wherein the clippings can flow towards the mower only a single chute 22 may be necessary. However, in embodiments where the strimmer 30 and the mower are in separate compartments, there may be a separate chute 22 for each compartment.

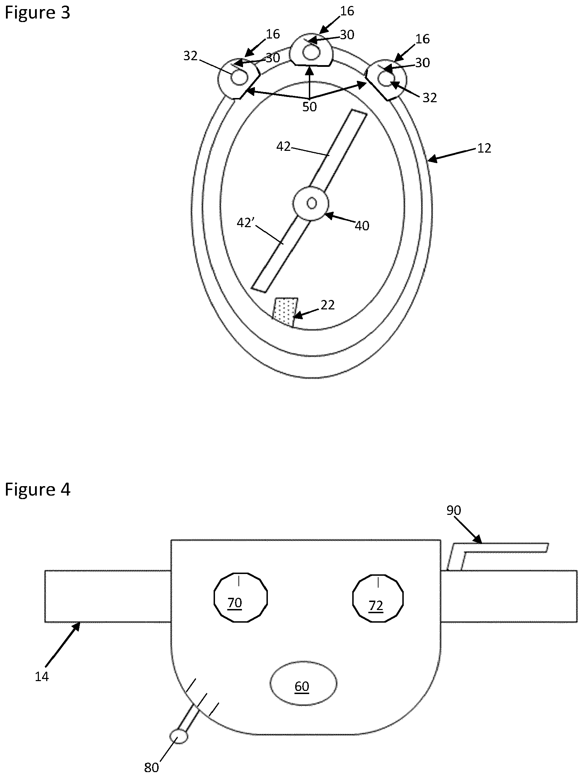

Figure 3 depicts the underside of an alternative embodiment of the apparatus where there are multiple strimmer 30 attached to the housing 10. These additional strimmer 30 are located around the edge of the housing in the same way as the strimmer 30 described above. Each strimmer 30 may have a respective cowl 16, or housing, with an opening to allow grass to enter the strimmer 30, and may also have a respective guard wall 50 and cap 32, to protect the strimmer from debris and impacts respectively. It is noted that as these additional strimmer 30 are at different angles relative to the mower, the user can trim over a larger area, and may be able to reach areas that the single strimmer could not due to the bulk of the housing 10 obstructing the strimmer 30.

However, it is noted that different alternatives may achieve the same effect as the use of multiple strimmer 30. Namely, housing 10 may comprise a removable strimmer unit that the user may remove and use remotely from the rest of the housing 10 to reach areas that the whole housing could not reach. Alternatively, the strimmer 30 may be coupled to an actuated arm. Wherein the arm is configured to rotate, and thereby sweep the strimmer 30 over a larger area, and may also be used to adjust the relative angle between the strimmer 30 and the mower, thereby allowing a single strimmer 30 to cover a larger area and reach more places.

It is also noted that the rotors 40 of the mower and the strimmers 30 may be actuated relative to the housing 10. More specifically the strimmer 30 and mower may be configured to raise or lower relative to the housing 10. This may be used to adjust the length of the grass that will be cut, by changing the height of the blades 42,42' and strimmers 30 to the desired height for the grass. It may also be used to prevent certain parts of the apparatus from cutting. For example, when the user does not wish to use the strimmers 30, they may be raised above the mower blades 42,42', likewise, when the user wants to use only the strimmers 30 they may raise the mower blades 42,42' to be above the level of the strimmers 30. The strimmers 30 may also be configured to rotate into a horizontal position when not in use, again to bring the strimmer 30 above the mower blades 42,42', note that this rotation may also disconnect the strimmers 30 from the power supply to help preserve power when the strimmers 30 are not in use.

It should also be noted that the raising and lowering of the mower blades 42,42', and strimmer 30, may affect the air cushion generated by the apparatus. As the distance between the mower rotor 40/ strimmer 30 and the ground changes, so too does the amount of downforce generated by the mower and strimmer 30. For this reason, the apparatus may also be configured to adjust the speed of the strimmer 30 and mower rotor 40 as their heights are adjusted. More specifically, the speed of the strimmer 30 and mower may be increased as they rise higher above the ground, such as between 5mm and 10mm, thereby allowing the force-generating the air cushion to be consistent regardless of the position of the mower and strimmer 30. The user may also use these controls to increase the speed of the rotor 40, or strimmer 30 when cutting areas where the grass is denser, as such areas will require more force to cut through.

Figure 4 depicts an example of the controls that may be coupled to the apparatus. It is noted that in the depicted example the controls are coupled to the handle 14, though some of these controls may also be coupled to the housing 10 itself instead. The depicted controls comprise a power button 60 for activating and deactivating the power source. It also comprises a switch or lever 80 that can change which components receive the power from the power supply, switching between mower only, strimmer only or both. It is noted that in embodiments with multiple strimmers 30 there may also be the option to limit the power to a specific strimmer, or group of strimmers, for example limiting power only to strimmers on a certain side of the housing 10, this way the user does not expend power on redundant strimmers. It is noted that when the user wishes to limit powers to the strimmers only, there may not be sufficient lift to allow the apparatus to hover, especially in embodiments with only one strimmer 30. In such cases instead of stopping the mower entirely, the controls may raise the mower, to stop it from cutting, and limit the speed of the rotor 40 to the minimum speed needed to produce lift.

The controls also comprise a pair of dials 70,72, in this example, these dials 70,72 are for adjusting the speed of the mower and strimmers 30 respectively, though it is noted that a similar set of dials may be used to adjust the height of the mower and strimmers 30. Alternatively, there may be a pair of dials wherein one controls the speed of the mower and strimmers 30, and the other controls their height, with each of the dials adjusting the mower and strimmers simultaneously, in these cases the controls may also be limited to the mower, or strimmer 30 only using the model lever 80. It is noted that the mowers and strimmers 30 may have a lower limit for their speed, based on the minimum speed needed for lift, or minimum speed necessary to cut grass in the case of the strimmers 30, as they may not contribute to the overall lift of the apparatus. The speed dial's maximum speeds are based on the safety limits and manufacturer recommendations for the rotors 40, strimmers 30 and blades 42,42' used in the apparatus. Based on this information, the speed limits for the mower are preferably within the range 30000-70000RPM, while the strimmer speeds are preferably within the range 10000-30000RPM.

The depicted controls also comprise a spring-loaded safety lever 90, coupled to the handle 14. Wherein the user will grip the safety lever 90 when they grip the handle 14. The purpose of this lever 90 is to act as an emergency brake for the apparatus. More specifically, after the apparatus is activated, power is only supplied to the mower and strimmers 30 when the safety lever 90 is pressed. Should lever 90 be released, it will spring up and cut power to the rotor 40 and strimmers 30 immediately. This can help protect the user should they become caught in the apparatus, if the apparatus catches its power cable, or catches others in the area to be mowed. It also provides the user with a quick means of stopping and restarting the apparatus when they need to adjust the settings of the device, such as the mower speed or strimmer height, without the need to stop the power supply entirely, which may be preferable when using a petrol motor as the power source.

By using some or all of the features described above the present invention provides a gardening device that removes the need for multiple pieces of equipment, that are suitable for mowing large areas and precision trimming. It is also noted that the device may also remove the need to rake, or other devices for picking up the clipping, after the mowing is complete, further simplifying the process of mowing the desired area. And by using a single power source for the separate components the user may save both time and energy when using the disclosed apparatus, instead of the plurality of tools that is normally required for the same effect.

## Claims

1. A gardening apparatus comprising:
a housing 10 containing a mower apparatus, and at least one strimmer 30 positioned at a point along the circumference of the mower apparatus;
wherein the mower apparatus comprises one or more mower blades 42,42' coupled to a shaft to form a rotor 40 for rotating the blades 42,42' to mow;
wherein the apparatus is configured so that, in use, the movements of the blades 42,42' of the mower apparatus form an air cushion/bed under the housing 10, upon which the gardening apparatus can glide;
a handle 14 coupled to the housing, suitable to allow a user to move the gardening apparatus;
a first motor configured to power the rotor 40, and a second motor to power the strimmer 30;
a power supply coupled to both the motor for the mower apparatus and the motor for the strimmer;
a switch 80 configured to switch power between supplying power to the first motor, the second motor, or both.

2. The gardening apparatus of claim 1, wherein the housing 10 further comprises a removable container 20 for collecting the clippings from the mower apparatus, and/or the one or more strimmer 30, wherein the clippings are fed into the container 20 via one or more chutes 22.

3. The gardening apparatus of any preceding claim, wherein the gardening apparatus further comprises a lever or dial configured to raise and lower the position of the strimmers 30, or rotor 40.

4. The gardening apparatus of any preceding claim, wherein the gardening apparatus further comprises an actuated arm coupled to each of the one or more strimmers 30, wherein each actuated arm is configured to adjust the position of the strimmer along an arc that follows the edge of the housing 10.

5. The gardening apparatus of any preceding claim, wherein the power supply comprises at least one of the following integral to the apparatus: solar panels, petrol engine, chargeable batteries.

6. The gardening apparatus of any preceding claim, wherein the blades 42,42', of the mower apparatus, are configured to be removable.

7. The gardening apparatus of any preceding claim, wherein the apparatus further comprises motor control dials 70,72, that are configured to adjust the motor speed, for one or both of the mower motor and strimmer motors.

8. The gardening apparatus of any preceding claim, wherein the one or more strimmers 30, can be removed from the housing 10.

9. The gardening apparatus of any preceding claim, further comprising a guard wall 50 separating the mower blades 42,42' from the one or more strimmers 30.

10. The gardening apparatus of any preceding claim, wherein the housing comprises one or more vents 18.

11. The gardening apparatus of any preceding claim, wherein the handle 14 further comprises a safety lever 90 comprising a spring lever;
wherein power is only supplied to the mower apparatus, or strimmers 30, when the lever 90 is lowered/compressed towards the handle 14; and
wherein power is cut off from the apparatus if the lever 90 is released.

12. The gardening apparatus of any preceding claim, wherein the strimmer 30 is positioned at the front of the housing 10, forward the mower rotor 40;
and the handle 14 extends rearward from the back of the housing 10.

13. The gardening apparatus of any preceding claim, wherein there is a trough or bumper 12 along the edge of the body/cowl of the housing 10.

14. The gardening apparatus of any preceding claims wherein the mower apparatus and the one or more strimmers 30 are in separate compartments within the housing 10.

15. The gardening apparatus of any preceding claim, wherein each of the one or more strimmers 30 comprise a strimmer cowl 16.
